# EUROPEAN PATENT SPECIFICATION

(11) **EP 1 305 358 B1**
(45) Date of publication and mention of the grant of the patent: **08.10.2008**
(21) Application number: 01961471.8
(22) Date of filing: 02.07.2001
(51) Int. Cl.: C08G 83/00, C08L 101/00, C09D 201/00

(54) **DENDRITIC MACROMOLECULE WITH IMPROVED POLYETHER POLYOL SOLUBILITY AND PROCESS FOR PRODUCTION THEREOF**
DENDRIMERE MAKROMOLEKÜLE MIT VERBESSERTER POLYETHER-POLYOL-LÖSLICHKEIT UND VERFAHREN ZU DEREN HERSTELLUNG
MACROMOLECULE DENDRITIQUE AYANT UNE SOLUBILITE DE POLYOL DE POLYETHER AMELIOREE ET SON PROCEDE DE PRODUCTION

(30) Priority: 28.07.2000 US 221512 P
(43) Date of publication of application: 02.05.2003
(73) Proprietor: PERSTORP AB, 284 80 Perstorp (SE)
(72) Inventor: HAGGMAN, Bo, S-224 72 Lund (SE); BJÖRNBERG, Hakan, S-262 61 Ängelholm (SE)
(74) Representative: HOFFMANN EITLE
(86) International application number: PCT/SE2001/001518
(87) International publication number: WO 2002/010189

(56) References cited:
- EP-A- 0 899 286
- WO-A1-00/56802
- HELENE MAGNUSSON ET AL.: 'Synthesis of hyperbranched aliphatic polyethers via cationic ringopening polymerization of 3 ethyl-3-(hydroxymethyl) oxetane' MACROMOL. RAPID COMMUN. vol. 20, 1999, pages 453 - 457, XP000851978
- SCOTT M. GRAYSON ET AL.: 'Synthesis and surface functionalization of aliphatic polyether dendrons' J. AM. CHEM. SOC. vol. 122, 2000, pages 10335 - 10344, XP002958669

## Description

In one aspect, the present invention relates to a dendritic macromolecule. Preferably, the macromolecule comprises a nucleus or initiator from which one or more chain extenders form a branched structure corresponding to at least one generation (as defined below). In a preferred embodiment, the dendritic macromolecule is terminated by means of at least one chain stopper. In a further aspect, the present invention relates to a composition comprising the subject dendritic macromolecule.

Dendritic macromolecules, including dendrimers, can generally be described as three dimensional highly branched molecules having a treelike structure. Macromolecules designated as dendritic or sometimes hyperbranched macromolecules may, to a certain degree, hold an asymmetry, yet maintaining the highly branched treelike structure. Dendrimers generally are highly symmetric. Dendrimers can be said to be monodisperse variations of dendritic macromolecules. Dendritic macromolecules normally consists of an initiator, core or nucleus having one or more reactive sites and a number of branching layers and, optionally, a layer of chain terminating molecules. The layers are usually called "generations", a designation used throughout this specification.

The composition of dendrimers, monodisperse dendritic macromolecules, having two branching generations can be illustrated by below Formulæ (I) and (II): 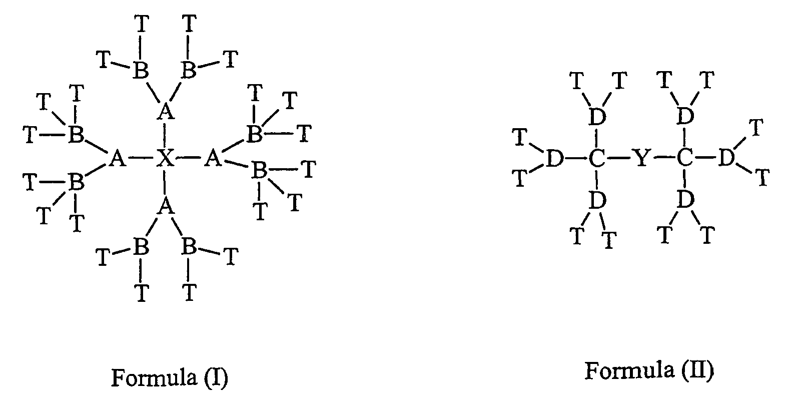 wherein: X and Y each is an initiator, core or nucleus having four and two reactive sites, respectively; A, B, C and D are chain extenders having three (A and B) and four (C and D) reactive sites, each chain extender forming one generation in the macromolecule; and T is either a terminating chain stopper or a suitable terminal functionality, consisting of for instance hydroxyl, carboxyl or epoxide groups, or a combination thereof. T may be for instance a moiety of a saturated or unsaturated compound, such as an air drying fatty acid or a derivative thereof.

As a result of their symmetrical or near symmetrical highly branched structures, dendritic macromolecules of the polyester type are characterised by having useful advantages over ordinary polyesters. Dendritic polyesters exhibit a low polydispersity especially in comparison to branched, but also linear, polyesters. A dendritic macromolecule can, due to its structure, be designed to give a very high molecular weight and yet exhibit a very low viscosity, thus being suitable as component in compositions such as coatings and the like in order to increase the solid content.

Various dendritic macromolecules are, *inter alia,* described in:
- Tomalia et al, Angew. Chem. Int. Ed. Engl. 29 pages 138-175 (190);
- United States Patent 5,418,301 to Hult el al;
- United States Patent 5,663,247 to Sörensen et al;
- International Publication no. WO 96/1532 - Perstorp AB. Tomalia et al discloses the preparation of polyamide amines of the dendrimer type. NH₃ is used as the initiator molecule, and methyl acrylate and ethylene diamine as the chain extenders. The resultant dendrimers are NH₂ terminated. Chain stoppers are not used.

United States Patent 5,418,301 discloses a dendritic macromolecule of the polyester type. The macromolecule includes as monomeric or polymeric initiator or nucleus a compound having one or more reactive hydroxyl groups and as chain extender a hydroxyfunctional carboxylic acid having at least one carboxyl group and at least two hydroxyl groups.

United States Patent 5,663,247 discloses a dendritic (hyperbranched) macromolecule of the polyester type comprising a monomeric or polymeric nucleus and at least one generation of a branching chain extender having at least three reactive sites of which at least one is a hydroxyl group and at least one is a carboxyl or terminal epoxide group. The nucleus is an epoxide compound having at least one reactive epoxide group. The macromolecules disclosed by United States Patent 5,663,247 are particularly advantageous in that they enhance various film properties, for instance drying time, hardness and scratch resistance, of a coating composition in which they i.a. are used.

The macromolecules of United States Patent 5,418,301 and United States Patent 5,663,247 are stated as being useful in a number of applications, including in the preparation of products constituting or being part of alkyds, alkyd emulsions, saturated polyesters, unsaturated polyesters, epoxy resins, phenolic resins, polyurethane resins, polyurethane foams and elastomers, binders for radiation curing systems such as systems cured with ultraviolett (UV) light, infrared (IR) light or electron-beams (EB), dental materials, adhesives, synthetic lubricants, microlithographic coatings and resists, binders for powder systems, amino resins, composites reinforced with glass, aramide or carbon/graphite fibres and moulding compounds based on urea-formaldehyde resins, mclamine-formaldehyde resins or phenol-formaldehyde resins.

While the macromolecules of United States Patent 5,4 8,301 and United States Patent 5,663,347 are significant advances in the art, there is still room for improvements, particularly in the application of the macromolecules in isocyanate based flexible and semi-rigid foams and elastomers. Specifically, the specific macromolecules taught by United States Patent 5,418,301 and United States Patent 5,663,247 are difficult to handle when producing commercial quantities of isocyanate based foams, such as polyurethane foams. The principal reason for this is the relatively poor solubility in polyether polyols having a hydroxyl value of said macromolecules at high active hydrogen functionality and molecular weight.

EP 0 899 286 concerns vinyl-group-containing dendrimer and curable composition.

Accordingly, it would be highly desirable to have a convenient means for incorporation of dendritic mucromolecules in a polyurethane foam matrix. More particularly, it would be very advantageous to be able to incorporate into the polyurethane foam matrix a dendritic macromolecule having a combination of high active hydrogen content, high active hydrogen functionality and which may be readily processed in a polyurethane foam production facility.

It is an object of the present invention to provide a novel dendritic macromolecule which obviates or mitigates at least one of the above-mentioned disadvantages of the prior art.

Accordingly, the present invention disclose a novel group of dendritic macromolecules which may be conveniently incorporated in polyurethane foams. Surprisingly and unexpectedly, it has been further found that said novel group of dendritic macromolecules confer significant load building properties to a polyurethane foam matrix and may be used for this purpose to partially or fully displace current relatively expensive chemical systems which are used to confer load building characteristics to polyurethane foams. This effect will be illustrated below in the embodiment Examples.

A feature of the present dendritic macromolecule is that at least 15% by weight of the dendritic macromolecule may be mixed with a polyether polyol having a hydroxyl value of 40 or less than 40 to form a stable liquid at 23°C. As used throughout this specification, the term "stable liquid", when used in connection with the solubility characteristics of the dendritic macromolecule, is intended to mean that the liquid formed upon mixing the dendritic macromolecule and the polyether polyol has a substantially constant light transmittance (transparent at one extreme and opaque at the other extreme) for at least 2 hours, preferably at least 30 days, more preferably a number of months, after production of the mixture. Practically, in one embodiment, the stable liquid will be in the form of a clear, homogeneous liquid (e.g., a solution) which will remain as such over time. In another embodiment, the stable liquid will be in the form of an emulsion of the dendritic macromolecule in the polyol which will remain as such over time - i.e. the dendritic macromolecule will not settle out over time.

Accordingly, in one of its aspects, the present invention provides a dendritic macromolecule having the following characteristics:
i) an active hydrogen content of least 3.8 or preferably at least 4, such as an active hydrogen content in the range of 3.8-10, 3.8-7, 4-8 or 4.4-5.7, mmoles/g;
ii) an active hydrogen functionality of at least 16 or preferably at least 18, such as 16-70, 18-60, 17-35 or 20-30;
and which macromolecule is mixable at an amount of at least 15%, such as 15-50%, 15-40% or 15-30%, by weight with a polycther polyol having a hydroxyl number of at most 40, such as 35-40 or 28-32, mg KOH/g to form a stable liquid at 23°C.

As used throughout this specification, the term "active hydrogen functionality" is intended to mean the number of active hydrogen moieties per molecule of the dendritic macromolecules.

The general architecture of the present dendritic macromolecule is similar to other such macromolecules,

Specifically, the present dendritic macromolecule may be derived from: (a) a monomeric or polymeric initiator, (b) at least one inherently branched structure comprising at least one generation of at least one branching monomeric or polymeric chain extender having a plurality of reactive sites comprising an active hydrogen containing moiety, and (c) optionally, at least one monomeric or polymeric chain stopper terminating the macromolecule. The monomeric or polymeric initiator is chemically bonded to said inherently branched structure.

The monomeric or polymeric initiator included in the dendritic macromolecule of the present invention is not particularly restricted and, in a preferred embodiment, is suitably selected from the groups of monomeric or polymeric initiators and nuclei disclosed in United States Patent 5,418,301 and United States Patent 5,663,247 referred to above.

The chain extender(s) included in the dendritic macromolecule of the present invention is not particularly restricted and, in a preferred embodiment, is suitably selected from the groups of chain extenders disclosed in United States Patent 5,418,301 and United States Patent 5,663,247 referred to above.

The chain stopper, if used, in the dendritic macromolecule of the present invention is not particularly restricted and, in a preferred embodiment, is suitably selected from the goups of chain stoppers disclosed in United States Patent 5,418,301 and United States Patent 5,663,247 referred to above.

The present dendritic macromolecules may be of the so-called ester type, for example, as disclosed in United States Patent 5,418,301 and United States Patent 5,663,247. Alternatively, the present dendritic macromolecule may be of the so-called ether type, for example, as disclosed by Magnusson et al in Macromol. Rapid Commun. 20, 453-457 (1999).

Further, the dendritic macromolecule need not necessarily include a monomeric or polymeric nucleus or initiator. Specifically, the macromolecule may be a polymer derived directly from the chain extender(s). Dendritic macromolecules derived directly from a chain extender is illustrated in Example 7, wherein a dendritic macromolecule is produced from trimethylolpropane oxetane. Further dendritic macromolecules derived directly from a chain extender can be exemplified by polycondensation of one or more hydroxyfunctional carboxylic acids, such as 2-2-dimethylolpropionic acid

Embodiments of the dendritic macromolecule of the present invention include species wherein the active hydrogen is present in said macromolecule in form of one or more mercapto moieties, one or more primary amino moieties, one or more secondary amino moieties, one or more hydroxyl moieties or in form of two or more moieties selected from the group consisting of a mercapto moiety, a primary amino moiety, a secondary amino moiety, a hydroxyl moiety and any combination thereof.

A dendritic macromolecule having primary amino moieties can suitably be obtained in a process comprising the Steps of
i) subjecting a hydroxyfunctional dendritic polyether having one or more hydroxyl groups to alkolation by:
   a) mixing said polyether and a suitable solvent, such as tetrahydrofuran, and
   b) adding, preferably when a clear solution is obtained, in stoichiometric amount or in slight excess a base, such as NaOH, KOH and/or NaH;
ii) subjecting in Step (i) obtained alkolate to nitrilation by addition of said alkolate to acrylonitrile unsaturation, said acrylonitrile being charged in a stoichiometric amount with regard to moles of said alkolate, whereby said alkolate is converted to a nitrile functional dendritic polymer of polyether type; and
iii) converting said nitrile functional dendritic polymer to an amine functional dendritic polymer of polyether type by:
   a) reducing pH of in Step (ii) obtained reaction mixture by addition of protons;
   b) passing H₂ through said reaction mixture in presence of a reducing catalyst, such as Pt, Pd and/or Raney Ni neat or fixated to a carrier such as a carbon carrier, and subsequently recovering obtained amine functional dendritic polymer of polyether type.
or in a process comprising the Steps of:
i) subjecting a hydroxyfunctional dendritic polyester to acrylarion at a ratio COOH:OH of 0.1:1 to 1:1;
ii) reacting in Step (i) obtained acrylated product with at least one primary aliphatic, cycloaliphatic or aromatic amine, such as propyl amine, isopropylamine, octyl amine, butyl amine or benzyl amine, said amine being charged in a stoichiometric amount or in excess to said acrylated product and said reaction being performed at room temperature or an elevated temperature, such as 50°C, and subsequently recovering obtained amine functional dendritic polymers of polyester type.
See also Examples 11 and 12 for further details on above subject matter of the present invention.

Said macromolecule has in its embodiment an inherently branched structure, such as a plurality of inherently branched structures chemically bonded to one another, which inherently branched structure may comprise one or more monomeric or polymeric moieties selected from the group consisting of an ester moiety, an ether moiety and any combination thereof, such as at least one ester moiety, optionally combined with at least one ether moiety or at least one ether moiety, optionally combined with at least one ester moiety. Said inherently branched structure may further comprise at least one, such as two or more different, monomeric or polymeric chain stopper moiety/moieties chemically bonded thereto. Said inherently branched structure may yet further comprise at least one monomeric or polymeric spacing chain extender chemically bonded thereto.

As will be developed herein below in the embodiment Examples (see particularly Example 7), it is possible to select the chain extenders to achieve a dendritic macromolecule having solubility parameter set out above, without the need for the use of a chain stopper.

In a further aspect the present invention refers to a composition comprising at least 15% by weight of the dendritic macromolecule disclosed above and at most 85%, such as 15-75%, 30-50% or 35-45%, by weight of a polyether polyol having a hydroxyl value of 40 or at most 40 mg KOH/g.

Embodiments of the present invention will be disclosed with reference to Examples 1-17 which are provided for illustrative purposes only and should not be used to construe or limit the scope of the invention. Examples 1-7 and 11-12 illustrate production and derivatisation of dendritic macromolecules, Example 8-10 disclose solubility evaluations of the macromolecules of Examples 1-7, and Examples 13-17 illustrate the use of the subject dendritic macromolecule in a typical isocyanate based foam.

### Example 1 (Comparative)

100.0 kg of an alkoxylated pentaerythritol (Perstorp Specialty Chemicals) with a hydroxyl value of 630 mg KOH/g, 1055 kg of 2,2-dimethylolpropionic acid (Bis-MPA, Perstorp Specialty Chemicals) and 8.5 kg of p-toluenesulphonic acid were cold mixed in a reactor equipped with a heating system with accurate temperature control, a mechanical stirrer, a pressure gauge, a vacuum pump, a cooler, nitrogen inlet and a receiver. The mixture was heated carefully during slow stirring to a temperature of 140°C. Slow stirring of the mixture at this temperature was maintained at atmospheric pressure until all 2,2-dimethylolpropionic acid was dissolved and the reaction mixture formed a fully transparent solution. The stirring speed was then significantly increased and vacuum was applied to a pressure of 30 mbar. Reaction water immediately started to form, which was collected in the receiver. The reaction was allowed to continue for a further 7 hours, until a final acid value of ≈ 9 mg KOH/g was obtained. This corresponded to a chemical conversion of ≈ 98%.

The obtained dendritic polymer had the following characteristics:

| | |
|---|---|
| Final acid value: | 8.9 mg KOH/g |
| Final hydroxyl value: | 489 mg KOH/g |
| Peak molecular weight: | 3490 g/mole |
| Mw (SEC): | 3520 g/mole |
| Mn (SEC): | 2316 g/mole |
| PDI (Mw/Mn): | 1.52 |
| Average hydroxyl functionality: | 30.4 hydroxyl groups/molecule |

The obtained properties were in good agreement with the expected theoretical molecular weight of 3607 g/mole at 100% chemical conversion and the theoretical hydroxyl value of 498 mg KOH/g, which correspond to a hydroxyl functionality of 32.

### Example 2 (Comparative)

16.7 kg of an alkoxylated pentaerythritol (Perstorp Specialty Chemicals) with a hydroxyl value of 630 mg KOH/g, 375.0 kg of 2,2-dimethylolpropionic acid (Bis-MPA, Perstorp Specialty Chemicals) and 3.0 kg of p-toluenesulphonic acid were cold mixed in a reactor equipped with a heating system with accurate temperature control, a mechanical stirrer, a pressure gauge, a vacuum pump, a cooler, nitrogen inlet and a receiver. The mixture was heated carefully during slow stirring to a temperature of 140°C. Slow stirring of the mixture at this temperature was maintained at atmospheric pressure until all 2,2-dimethylolpropionic acid was dissolved and the reaction mixture formed a fully transparent solution. The stirring speed was then significantly increased and vacuum was applied to a pressure of 30 mbar. Reaction water immediately started to form, which was collected in the receiver. The reaction was allowed to continue for a further 8 hours, until a final acid value of ≈12 mg KOH/g was obtained. This corresponded to a chemical conversion of ≈ 97%.

The obtained dendritic polymer had the following characteristics:

| | |
|---|---|
| Final acid value: | 11.9 mg KOH/g |
| Final hydroxyl value: | 481 mg KOH/g |
| Peak molecular weight: | 5110 g/mole |
| Mw (SEC): | 5092 g/mole |
| Mn (SEC): | 3041 g/mole |
| PDI (Mw/Mn): | 1.67 |
| Average hydroxyl functionality: | 43.8 hydroxyl groups/molecule |

The obtained properties were in reasonable agreement with the expected theoretical molecular weight of 7316 g/mole at 100% chemical conversion and the theoretical hydroxyl value of 491 mg KOH/g, which correspond to a hydroxyl functionality of 64.

### Example 3 (Comparative)

83.6 kg of an alkoxylated pentaerythritol (Perstorp Specialty Chemicals) with a hydroxyl value of 630 mg KOH/g, 375.0 kg of 2,2-dimethylolpropionic acid (Bis-MPA, Perstorp Specialty Chemicals) and 3.25 kg ofp-toluenesulphonic acid were cold mixed in a reactor equipped with a heating system with accurate temperature control, a mechanical stirrer, a pressure gauge, a vacuum pump, a cooler, nitrogen inlet and a receiver. The mixture was heated carefully during slow stirring to a temperature of 140°C. Slow stirring of the mixture at this temperature was maintained at atmospheric pressure until all 2,2-dimethylolpropionic acid was dissolved and the reaction mixture formed a fully transparent solution. The stirring speed was then significantly increased and vacuum was applied to a pressure of 30 mbar. Reaction water immediately started to form, which was collected in the receiver. The reaction was allowed to continue for a further 7.5 hours, until an acid value of ≈ 5 mg KOH/g was obtained. This corresponded to a chemical conversion of ≈ 98%.

The obtained dendritic polymer had the following characteristics:

| | |
|---|---|
| Final acid value: | 4.7 mg KOH/g |
| Final hydroxyl value: | 508 mg KOH/g |
| Peak molecular weight: | 1998 g/mole |
| Mw (SEC): | 1997 g/mole |
| Mn (SEC): | 1451 g/mole |
| PDI (Mw/Mn): | 1.37 |
| Average hydroxyl functionality: | 18 hydroxyl groups/molecule |

The obtained properties were in good agreement with the expected theoretical molecular weight of 1750 g/mole at 100% chemical conversion and the theoretical hydroxyl value of 513 mg KOH/g, which correspond to a hydroxyl functionality of 16.

### Example 4

25 kg of the dendritic polymer according to Example 1, 8.4 kg of an aliphatic acid with nine carbon atoms having an acid number of 363 mg KOH/g and 3.3 kg of xylene were charged to a reactor equipped with a heating system with accurate temperature control, a mechanical stirrer, a pressure gauge, a vacuum pump, a Dean-Stark device for azeotropic removal of water, a cooler, nitrogen inlet and a receiver. The mixture was heated under stirring, with a nitrogen flow of 500-600 1/h through the reaction mixture, from room temperature to 170°C. At this temperature all xylene was refluxing and the reaction water which started to form was removed by azeotropic distillation. The reaction was allowed to continue for a further 1.5 hours at 170°C, after which the reaction temperature was increased to 180°C. The reaction mixture was kept at this temperature for a further 2.5 hours until an acid value of ≈ 6 mg KOH/g was obtained. Full vacuum was then applied to the reactor to remove all xylene from the final product. The obtained derivatised dendritic polymer had the following characteristics:

| | |
|---|---|
| Final acid value: | 6.2 mg KOH/g |
| Final hydroxyl value: | 293 mg KOH/g |
| Peak molecular weight: | 4351 g/mole |
| Mw (SEC): | 4347 g/mole |
| Mn (SEC): | 1880 g/mole |
| PDI (Mw/Mn): | 2.31 |
| Average hydroxyl functionality: | 22.7 hydroxyl groups/molecule |

The obtained properties were in reasonable agreement with the expected theoretical molecular weight of 4699 g/mole at 100% chemical conversion and the theoretical hydroxyl value of 287 mg KOH/g, which correspond to a hydroxyl functionality of 24.

### Example 5

25 kg of the dendritic polymer according to Example 3, 5.25 kg of an aliphatic acid with nine carbon atoms having an acid number of 363 mg KOH/g and 3.0 kg of xylene were charged to a reactor equipped with a heating system with accurate temperature control, a mechanical stirrer, a pressure gauge, a vacuum pump, a Dean-Stark device for azeotropic removal of water, a cooler, nitrogen inlet and a receiver. The mixture was heated under stirring, with a nitrogen flow of 500-600 1/h through the reaction mixture, from room temperature to 180°C. At this temperature all xylene was refluxing and the reaction water which started to form was removed by azeotropic distillation. The reaction was allowed to continue for a further 5 hours at 180°C until an acid value of ≈ 6 mg KOH/g was reached. Full vacuum was then applied to the reactor to remove all xylene from the final product.

The obtained derivatised dendritic polymer had the following characteristics:

| | |
|---|---|
| Final acid value: | 6.0 mg KOH/g |
| Final hydroxyl value: | 360 mg KOH/g |
| Peak molecular weight: | 2700 g/mole |
| Mw (SEC): | 2733 g/mole |
| Mn (SEC): | 1673 g/mole |
| PDI (Mw/Mn): | 1.61 |
| Average hydroxyl functionality: | 17.3 hydroxyl groups/molecule |

The obtained properties were in reasonable agreement with the expected theoretical molecular weight of 2080 g/mole at 100% chemical conversion and the theoretical hydroxyl value of 367 mg KOH/g, which correspond to a hydroxyl functionality of 13.6.

### Example 6

25 kg of the dendritic polymer according to Example 2, 8.3 kg of an aliphatic acid with nine carbon atoms having an acid number of 363 mg KOH/g and 3.3 kg of xylene were charged to a reactor equipped with a heating system with accurate temperature control, a mechanical stirrer, a pressure gauge, a vacuum pump, a Dean-Stark device for azeotropic removal of water, a cooler, nitrogen inlet and a receiver. The mixture was heated under stirring, with a nitrogen flow of 500-600 1/h through the reaction mixture, from room temperature to 180°C. At this temperature all xylene was refluxing and the reaction water which started to form was removed by azeotropic distillation. The reaction was allowed to continue for a further 5 hours at 180°C until an acid value of ≈ 7 mg KOH/g was reached. Full vacuum was then applied to the reactor to remove all xylene from the final product.

The obtained derivatised dendritic polymer had the following characteristics:

| | |
|---|---|
| Final acid value: | 6.8 mg KOH/g |
| Final hydroxyl value: | 280 mg KOH/g |
| Peak molecular weight: | 5274 g/mole |
| Mw (SEC): | 5245 g/mole |
| Mn (SEC): | 2428 g/mole |
| PDI (Mw/Mn): | 2.16 |

The obtained properties were in reasonable agreement with the expected theoretical hydroxyl value of 283 mg KOH/g.

### Example 7

200.0 g of trimethylolpropane oxetane (TMPO, Perstorp Specialty Chemicals) was charged to a reactor equipped with a mechanical stirrer, a cooler and a heating system with adequate heating control. 2.0 g of a solution of BF₃ etherate (10% in diethyl ether) was charged at room temperature to the reactor during less than 120 seconds. A strong exotherm was seen as a result of the ring opening polymerisation of the oxetane monomer. Once the exotherm faded, the reaction mixture was heated to 150°C and kept at that temperature under stirring for a further 90 minutes. The reaction mixture was then cooled to room temperature at which the final product was recovered.

The obtained dendritic polymer of polyether type had the following characteristics:

| | |
|---|---|
| Final hydroxyl value: | 500 mg KOH/g |
| Peak molecular weight: | 6307 g/mole |
| Mw (SEC): | 5309 g/mole |
| Mn (SEC): | 2011 g/mole |
| PDI (Mw/Mn): | 2.64 |
| Average hydroxyl functionality: | 56 hydroxyl groups/molecule |
| Chemical conversion: | 99.4% with regard to residual monomer content |

### Example 8 (Comparative)

The solubility of each of the dendritic polymers according to Examples 1-3 in a glycerol based polyether polyol with a hydroxyl value of 32 mg KOH/g was evaluated.

15.0 g of respective dendritic polymer according to Examples 1-3 was added to a beaker containing 75.0 g of a glycerol based polyether polyol with a hydroxyl value of 32 mg KOH/g. The mixture was heated under stirring to 120°C during 30 minutes and then allowed to cool down to room temperature. The ability for each dendritic polymer to form a stable solution with the polyether polyol was evaluated after 120 minutes.

None of the dendritic polymers according to Examples 1-3 were able to form a stable solution with the glycerol based polyether polyol of hydroxyl value 32 mg KOH/g. The dendritic polymers according to Examples 1-3 partly precipitated from the solution and this could be observed in the form of a separate phase at the bottom of the beaker.

### Example 9

The solubility of each of the dendritic polymers according to Examples 4-6 in a glycerol based polyether polyol with a hydroxyl value of 32 mg KOH/g was evaluated.

15.0 g of respective dendritic polymer according to Examples 4-6 was added to a beaker containing 75.0 g of a glycerol based polyether polyol with a hydroxyl value of 32 mg KOH/g. The mixture was heated under stirring to 120°C during 30 minutes and then allowed to cool down to room temperature. The ability for each dendritic polymer to form a stable solution with the polyether polyol was evaluated after 120 minutes.

All of the evaluated dendritic polymers according to Example 4-6 were fully soluble in the glycerol based polyether polyol. Fully transparent solutions were obtained in all cases, which were stable over time. Due to the excellent solubility, samples of higher concentrations based on the products obtained according to Examples 4-6 were prepared. These were then evaluated with regard to viscosity at 23°C. Samples of different concentrations of dendritic polymer according to Examples 4-6 in polyether polyol were prepared and found to be fully compatible with the base glycerol based polyether polyol. These stable solutions remained as such even after 30 days.

The attached Figure 1 illustrates the viscosity dependence in a polyether polyol of products according to Examples 4-6. As can be seen from the results illustrated in the attached Figure 1, very good behaviour of the products according to Examples 4-6 were obtained.

### Example 10

The solubility of the dendritic polymer of polyether type according to Example 7 in a glycerol based polyether polyol with a hydroxyl value of 32 mg KOH/g was evaluated.

15.0 g of the dendritic polymer according to Example 7 was added to a beaker containing 75.0 g of a glycerol based polyether polyol with a hydroxyl value of 32 mg KOH/g. The mixture was heated under stirring to 120°C during 30 minutes and then allowed to cool down to room temperature. The ability for the dendritic polymer to form a stable solution with the polyether polyol was evaluated after 120 minutes.

It was found that the dendritic polymer of polyether type according to Example 7 formed an opaque but completely stable solution with the glycerol based polyether polyol.

### Example 11

An amine terminated dendritic polymer of polyether type was prepared according to the following principal synthesis procedure:

Step 1: A dendritic polyether, such as a dendritic polymer according to Example 7, and a suitable solvent, such as tetrahydrofuran (THF), are charged to a reactor equipped with a mechanical stirrer, a heating system with adequate temperature control, a cooler, gas inlet, a vacuum pump and a receiver. When a transparent solution is obtained, a base such as NaOH, KOH or NaH is added in stoichiometric amount or with a slight excess, at which the dendritic alkolate is formed (RO⁻Na⁺).

Step 2: Acrylonitrile is added in a stoichiometric amount with regard to the moles of RO⁻Na⁺ species present in the reaction mixture from Step 1. The alkolated species will then undergo an addition to the unsaturation of the acrylonitrile. The obtained product in Step 2 has therefore been converted to a nitrile terminated dendritic polymer of polyether type.

Step 3: The nitrile functionality of the reaction product according to Step 2 is converted to primary amines by: (i) reducing the pH of the reaction mixture by addition of protons, (ii) thereafter passing H₂ (g) through the reaction mixture in the presence of a reducing catalyst, such as Pt, Pd or Raney Ni neat or fixated (e.g. to a carbon carrier); and (ii) thereafter recovering the obtained amine functional dendritic polymer of polyether type by for instance conventional washing and/or extraction procedures.

Further details on species of these reaction steps may be found in House, H.O., "Modem Synthetic Reactions", 16-19, Benj. Cumm. Publ. (1972).

### Example 12

A fully or partially amine terminated dendritic polymer of polyester type was prepared according to the following principal synthesis procedure:

Step 1: A dendritic polyester, such as a polymer according to any of the Examples 1-6, acrylic acid in a ratio COOH:OH of 0.1:1 to 1:1 with regard to the hydroxyl value of the dendritic polymer and a protonic acid, such as methane sulphonic acid (≈ 1% by weight concentration of the total solution), one or several inhibitors for radical polymerisation (e.g. hydroquinone and/or an alkylhydroquinone) and a solvent, such as toluene or a mixture of, for example, toluene and tetrahydrofuran, are charged to a reactor equipped with a mechanical stirrer, a Dean-Stark separated, adequate temperature control, nitrogen inlet, a cooler and a receiver. The reaction mixture is heated to 100-120°C, at which point the solvent is starting to reflux and reaction (esterification) water is starting to form. The reaction is allowed to continue at said temperature until an acid value of about 5-30 mg KOH/g, preferably 5-15 mg KOH/g, is reached. The product is then used as such or further purified by either washing with a weak aqueous solution of for instance NaOH, or the residual acrylic acid is precipitated with, for example, Al₂O₃.

Step 2: The acrylated product according to Step 1 is then reacted with a primary aliphatic, cycloaliphatic or aromatic amine, such as propyl amine, isopropylamine, octyl amine, butyl amine *(n-, sec-, tert-)* or benzyl amine. The amine of choice is added in stoichiometric amount or in excess to the acrylated product of Step 1, at which an addition reaction to the unsaturation of the dendritic acrylate will occur. The reaction is either performed at room temperature or a slightly elevated temperature, such as 50°C. The conversion of acrylate to amine is suitably either followed by IR or NIR by the disappearance of acrylate unsaturations, or by GC analysis of the residual amine content in the mixture. Obtained amine terminated dendritic polymer of polyester type is then recovered by evaporating residual amine monomer and solvent by applying full vacuum to the reactor.

### Examples 13-17

Examples 13-17 illustrate the use of the present dendritic polymer in a typical isocyanate based high resilient (HR) based foam. In each Example, the isocyanate based foam was prepared by the pre-blending of all resin ingredients including polyols, copolymer polyols (if used), catalysts, water, and surfactants as well as the dendritic macromolecule of interest (if used). The isocyanate was excluded from the mixture. The resin blend and isocyanate were then mixed at an isocyanate index of 100 using a conventional two-stream mixing technique and dispensed into a preheated mould (65°C) having the dimensions 38.1 x 38.1 x 10.16 cm. The mould was then closed and the reaction allowed to proceed until the total volume of the mould was filled. After approximately 6 minutes, the isocyanate based foam was removed and, after proper conditioning, the properties of interest were measured. The methodology will be referred to in Examples 13-17 as the General Procedure.

In Examples 13-17, the following materials were used:
E837, base polyol, commercially available from Lyondell;
E850, a 43% solids content copolymer (SAN) polyol, commercially available from Lyondell;
HBP, a dendritic macromolecule produced in Example 4 above;
DEAO LF, diethanol amine, a crosslinking agent commercially available from Air Products;
Glycerine, a crosslinking agent, commercially available from Van Waters & Rogers;
Water, indirect blowing agent;
Dabco 33LV, a gelation catalyst, commercially available from Air Products;
Niax A-1, a blowing catalyst, commercially available from Witco;
Y-10184, a surfactant, commercially available from Witco; and
Lupranate T80, isocyanate (toluene diisocyanate - TDI), commercially available from BASF.

Unless otherwise stated, all parts reported in Examples 13-17 are parts by weight.

In Examples 13-15, isocyanate based foams based on the formulations shown in Table 1 were produced using the General procedure referred to above.

In Examples 13-15, isocyanate based foams were prepared in the absence of any copolymer polyol. The isocyanate based foams were formulated with a H₂O concentration of 3.8% resulting in an approximate foam core density of 31 kg/m³. The level of dendritic macromolecule was varied from 6.68% to 13.35% by weight in the resin.

The results of physical property testing are reported in Table 1. Also reported in Table 1 for each foam is the density and Indentation Force Deflection (IFD) at 50% deflection, measured pursuant to ASTM D3574. As shown, the introduction of the dendritic macromolecule to the isocyanate based polymer matrix resulted in a ≈ 83 N hardness increase for foam from Example 13 to Example 14, and a ≈ 83 N hardness increase for the foam from Example 14 to Example 15.

By this analysis, a "load efficiency" for each foam may be reported and represents the ability of the dendritic macromolecule to generate firmness in the isocyanate based foam matrix. The efficiency is defined as the number of Newtons of foam hardness increase per % of the dendritic macromolecule in the resin blend. The term "load efficiency", as used throughout this specification, is intended to have the meaning set out in this paragraph.

As shown, the introduction of the dendritic macromolecule resulted in a foam hardness increase of 181 N. The resulting load efficiency is 27 N/% dendritic macromolecule in the resin.

In Examples 16 and 17, isocyanate based foams based on the formulations shown in Table 1 were produced using the General Procedure referred to above.

In Examples 16 and 17, isocyanate based foams were prepared in the absence of any dendritic macromolecule and used only copolymer polyol as the method by which foam hardness is increased. Thus, it will be appreciated that Examples 16 and 17 are provided for comparative purposes only and are outside the scope of the present invention. The isocyanate based foams were formulated with a H₂O concentration of 3.8% resulting in an approximate foam core density of 31 kg/m³. The level of the copolymer polyol was varied from 8 to 26% by weight in the resin.

The result of physical property testing are reported in Table 1. As shown, the introduction of the copolymer resulted in a foam hardness increase of 192.1 N. The resulting load efficiency is 10.69 N/% copolymer polyol in the resin. As will be apparent, this is significantly less than the load efficiency achieved in the foams produced in Examples 13-15.

**Table 1**

| | Example | Example | Example | Example | Example |
|---|---|---|---|---|---|
| Ingredient | 13 | 14 | 15 | 16 | 17 |
| E837 | 92.8 | 89.2 | 85.6 | 34.85 | 79.95 |
| E850 | -- | -- | -- | 65.15 | 20.05 |
| HBP | 7.2 | 10.8 | 14.4 | -- | -- |
| DEOA LF | 1.1 | 1.1 | 1.1 | 1.1 | 1.1 |
| Glycerin | 0.6 | 0.6 | 0.6 | 0.6 | 0.6 |
| H₂O | 3.93 | 3.93 | 3.93 | 3.93 | 3.93 |
| Dabco 33LV | 0.411 | 0.452 | 0.492 | 0.33 | 0.33 |
| Niax A-1 | 0.08 | 0.08 | 0.08 | 0.08 | 0.08 |
| Y10184 | 1 | 1 | 1 | 1 | 1 |
| Total resin | 107.12 | 107.16 | 107.20 | 107.04 | 107.04 |
| Luprate T80 | 51.737 | 53.197 | 54.658 | 40.817 | 41.432 |
| Index | 100 | 100 | 100 | 100 | 100 |
| % H₂O | 3.8 | 3.8 | 3.8 | 3.8 | 3.8 |
| % SAN in resin | 0 | 0 | 0 | 26 | 8 |
| % HBP in resin | 6.68 | 10.01 | 13.35 | 0 | 0 |
| Total dry weight (g) | 476 | 471 | 473 | 550 | 556 |
| Density (kg/m³) | 31 | 31 | 31 | 31 | 31 |
| 50% IFD(N) | 301.6 | 399.9 | 482.6 | 468.4 | 276.3 |
| % Hysteresis | 34.9 | 39.3 | 42.6 | 38.4 | 29.1 |
| Load Efficiency | 27.13 | 27.13 | 27.13 | 10.69 | 10.69 |

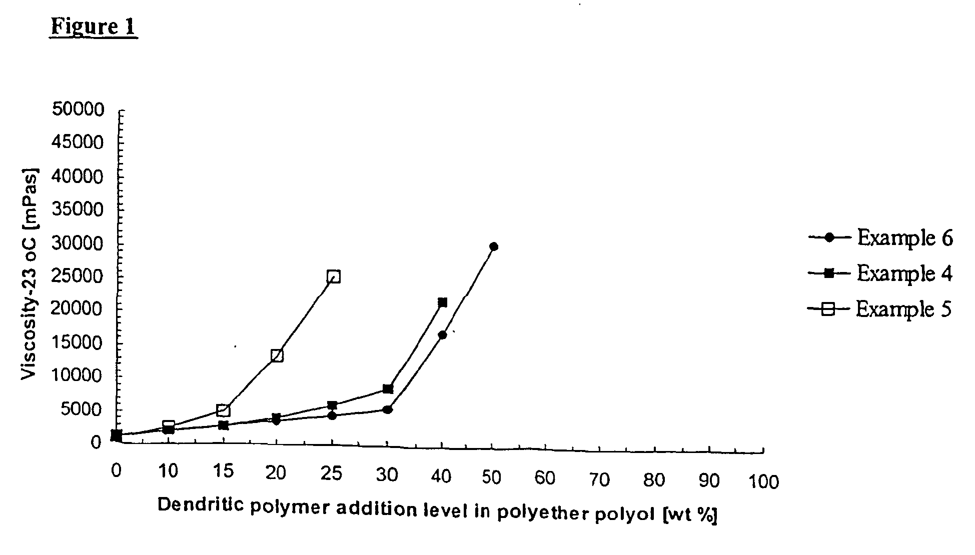

While this invention has been described with reference to illustrative embodiments and Examples, the description is not intended to be construed in a limiting sense. For example, while esterification/acid derivatisation and ring opening techniques were used in some of the Examples to produce embodiments of the novel dendritic macromolecule, other derivatisation techniques such as transesterification, polyaddition reactions, free radical polymerisation and the like can be used. Thus, various modifications of the illustrative embodiments, as well as other embodiments of the invention, will be apparent to persons skilled in the art upon reference to this description. It is therefore contemplated that the appended Claims will cover any such modifications or embodiments.

## Claims

1. A dendritic macromolecule **characterised in, that** it has an inherently branched structure built up from one or more moieties selected from the group consisting of an ester moiety, an ether moiety and any combination thereof, an active hydrogen content of at least 3.8 mmoles/g and an active hydrogen functionality of at least 16, that said active hydrogen is present in form of one or more mercapto and/or amino moieties optionally in combination with one or more hydroxyl moieties and that said dendritic macromolecule forms a stable liquid at 23°C when mixed in a ratio of at least 15% by weight with a polyether polyol having a hydroxyl value of at most 40 mg KOH/g.

2. A dendritic macromolecule according to Claim 1 **characterised in, that** said macromolecule forms a stable liquid at 23°C when mixed in a ratio of 15% to 50% by weight with a polyether polyol having a hydroxyl value of at most 40 mg KOH/g.

3. A dendritic macromolecule according to Claim 1 **characterised in, that** said macromolecule forms a stable liquid at 23°C when mixed in a ratio of 15% to 40% by weight with a polyether polyol having a hydroxyl value of at most 40 mg KOH/g.

4. A dendritic macromolecule according to Claim 1 **characterised in, that** said macromolecule is mixable at a ratio of 15% to 30% by weight with a polyether polyol having a hydroxyl value of at most 40 mg KOH/g to form a stable liquid at 23°C.

5. A dendritic macromolecule according to Claim 1 **characterised in, that** said macromolecule forms a stable liquid at 23°C when mixed in a ratio of at least 15% by weight with a polyether polyol having a hydroxyl value of at most 25 to 35 mg KOH/g.

6. A dendritic macromolecule according to Claim 1 **characterised in, that** said macromolecule forms a stable liquid at 23°C when mixed in a ratio of at least 15% by weight with a polyether polyol having a hydroxyl value of at most 28 to 32 mg KOH/g.

7. A dendritic macromolecule according to any of the Claims 1-6 **characterised in, that** said macromolecule has an active hydrogen content of 3.8-10 mmoles/g.

8. A dendritic macromolecule according to any of the Claims 1-6 **characterised in, that** said macromolecule has an active hydrogen content of 3.8-7 mmoles/g.

9. A dendritic macromolecule according to any of the Claims 1-6 **characterised in, that** said macromolecule has an active hydrogen content of 4-8 mmoles/g.

10. A dendritic macromolecule according to any of the Claims 1-6 **characterised in, that** said macromolecule has an active hydrogen content of 4.4-5.7 mmoles/g.

11. A dendritic macromolecule according to any of the Claims 1-6 **characterised in, that** said macromolecule has an active hydrogen functionality of 16-70.

12. A dendritic macromolecule according to any of the Claims 1-6 **characterised in, that** said macromolecule has an active hydrogen functionality of 18-60.

13. A dendritic macromolecule according to any of the Claims 1-6 **characterised in, that** said macromolecule has an active hydrogen functionality of 17-35.

14. A dendritic macromolecule according to any of the Claims 1-6 **characterised in, that** said macromolecule has an active hydrogen functionality of 20-30.

15. A dendritic macromolecule according to Claim 1 **characterised in, that** said macromolecule is obtainable in a process comprising the Steps of:
i) subjecting a hydroxyfunctional dendritic polyether to alkolation by mixing said polyether and a solvent and adding, when a clear solution is obtained, in stoichiometric amount or with a slight excess of base;
ii) subjecting in Step (i) obtained alkolate to nitrilation by addition of said alkolate to acrylonitrile unsaturation, said acrylonitrile being charged in a stoichiometric amount with regard to moles of said alkolate, whereby said alkolate is converted to a nitrile functional dendritic polyether; and
iii) converting said nitrile functional dendritic polyether to an amine functional dendritic polyether of polyether type by:
a) reducing pH of in Step (ii) obtained reaction mixture by addition of protons;
b) passing H₂ through said reaction mixture in presence of a reducing catalyst, and subsequently recovering obtained amine functional dendritic polyether.

16. A dendritic macromolecule according to Claim 1 **characterised in, that** said macromolecule is obtainable in a process comprising the Steps of:
i) subjecting a hydroxyfunctional dendritic polyester to acrylation at a ratio COOH:OH of 0.1:1 to 1:1;
ii) reacting in Step (i) obtained acrylated product with at least one primary aliphatic, cycloaliphatic or aromatic amine, said amine being charged in a stoichiometric amount or in excess to said acrylated product and said reaction being performed at room temperature or an elevated temperature, and subsequently recovering obtained amine functional dendritic polyester.

17. A dendritic macromolecule according to Claim 16 **characterised in, that** said primary aliphatic, cycloaliphatic or aromatic amine is propyl amine, isopropyl amine, octyl amine, butyl amine or benzyl amine.

18. A dendritic macromolecule according to any of the Claims 1-17 **characterised in, that** said macromolecule has an inherently branched structure comprising at least one ester moiety, optionally combined with at least one ether moiety.

19. A dendritic macromolecule according to any of the Claims 1-17 **characterised in, that** said macromolecule has an inherently branched structure comprising at least one ether moiety, optionally combined with at least one ester moiety.

20. A dendritic macromolecule according to any of the Claims 18-19 **characterised in, that** a plurality of inherently branched structures are chemically bonded to one another.

21. A dendritic macromolecule according to any of the Claims 18-20 **characterised in, that** said inherently branched structure further comprises at least one monomeric or polymeric chain stopper moiety chemically bonded thereto.

22. A dendritic macromolecule according to any of the Claims 18-20 **characterised in, that** said inherently branched structure further comprises at least two different chain stopper moieties chemically bonded thereto.

23. A dendritic macromolecule according to any of the Claims 18-22 **characterised in, that** said inherently branched structure further comprises at least one monomeric or polymeric spacing chain extender chemically bonded thereto.

24. A dendritic macromolecule according to any of the Claims 18-23 **characterised in, that** said macromolecule further comprises a monomeric or polymeric nucleus to which said inherently branched structure is chemically bonded.

25. A composition **characterised in, that** it comprises at least 15% by weight of the dendritic macromolecule according to any of the Claims 1-24 and at most 85% by weight of a polyether polyol having a hydroxyl value of at most 40 mg KOH/g.

26. A composition according to Claim 25 **characterised in, that** said dendritic macromolecule is present in an amount of 15-75% by weight.

27. A composition according to Claim 25 **characterised in, that** said dendritic macromolecule is present in an amount of 30-50% by weight.

28. A composition according to Claim 25 **characterised in, that** said dendritic macromolecule is present in an amount of 35-45% by weight.

## Patentansprüche

1. Dendritisches Makromolekül, **dadurch gekennzeichnet, daß** es eine inhärente verzweigte Struktur hat, welche aus einem oder mehreren Resten aufgebaut ist, die aus der Gruppe ausgewählt sind, die aus einem Esterrest, einem Etherrest und irgendeiner Kombination daraus besteht, einen aktiven Wasserstoffgehalt von mindestens 3,8 mmol/g und eine aktive Wasserstofffunktionalität von mindestens 16 hat, wobei der aktive Wasserstoff in Form eines oder mehrerer Mercapto- und/oder Aminoreste vorhanden ist, gegebenenfalls in Kombination mit einem oder mehreren Hydroxylresten, und wobei das dendritische Makromolekül bei 23°C eine stabile Flüssigkeit bildet, wenn es in einem Verhältnis von mindestens 15 Gew.% mit einem Polyetherpolyol gemischt wird, welcher einen Hydroxylwert von höchstens 40 mg KOH/g hat.

2. Dendritisches Makromolekül gemäß Anspruch 1, **dadurch gekennzeichnet, daß** dieses Makromolekül bei 23°C eine stabile Flüssigkeit bildet, wenn es in einem Verhältnis von 15 bis 50 Gew.% mit einem Polyetherpolyol mit einem Hydroxylwert von höchstens 40 mg KOH/g gemischt wird.

3. Dendritisches Makromolekül gemäß Anspruch 1, **dadurch gekennzeichnet, daß** dieses Makromolekül bei 23°C eine stabile Flüssigkeit bildet, wenn es in einem Verhältnis von 15 bis 40 Gew.% mit einem Polyetherpolyol mit einem Hydroxylwert von höchstens 40 mg KOH/g gemischt wird.

4. Dendritisches Makromolekül gemäß Anspruch 1, **dadurch gekennzeichnet, daß** dieses Makromolekül in einem Verhältnis von 15 bis 30 Gew.% mit einem Polyetherpolyol mit einem Hydroxylwert von höchstens 40 mg KOH/g mischbar ist, um eine stabile Flüssigkeit bei 23°C zu bilden.

5. Dendritisches Makromolekül gemäß Anspruch 1, **dadurch gekennzeichnet, daß** das Makromolekül bei 23°C eine stabile Flüssigkeit bildet, wenn es in einem Verhältnis von mindestens 15 Gew.% mit einem Polyetherpolyol mit einem Hydroxylwert von höchstens 25 bis 35 mg KOH/g gemischt wird.

6. Dendritisches Makromolekül gemäß Anspruch 1, **dadurch gekennzeichnet, daß** das Makromolekül bei 23°C eine stabile Flüssigkeit bildet, wenn es in einem Verhältnis von mindestens 15 Gew.% mit einem Polyetherpolyol mit einem Hydroxylwert von höchstens 28 bis 32 mg KOH/g gemischt wird.

7. Dendritisches Makromolekül gemäß irgendeinem der Ansprüche 1 bis 6, **dadurch gekennzeichnet, daß** das Makromolekül einen aktiven Wasserstoffgehalt von 3,8 bis 10 mmol/g hat.

8. Dendritisches Makromolekül gemäß irgendeinem der Ansprüche 1 bis 6, **dadurch gekennzeichnet, daß** das Makromolekül einen aktiven Wasserstoffgehalt von 3,8 bis 7 mmol/g hat.

9. Dendritisches Makromolekül gemäß irgendeinem der Ansprüche 1 bis 6, **dadurch gekennzeichnet, daß** das Makromolekül einen aktiven Wasserstoffgehalt von 4 bis 8 mmol/g hat.

10. Dendritisches Makromolekül gemäß irgendeinem der Ansprüche 1 bis 6, **dadurch gekennzeichnet, daß** das Makromolekül einen aktiven Wasserstoffgehalt von 4,4 bis 5,7 mmol/g hat.

11. Dendritisches Makromolekül gemäß irgendeinem der Ansprüche 1 bis 6, **dadurch gekennzeichnet, daß** das Makromolekül eine aktive Wasserstofffunktionalität von 16 bis 70 hat.

12. Dendritisches Makromolekül gemäß irgendeinem der Ansprüche 1 bis 6, **dadurch gekennzeichnet, daß** das Makromolekül eine aktive Wasserstofffunktionalität von 18 bis 60 hat.

13. Dendritisches Makromolekül gemäß irgendeinem der Ansprüche 1 bis 6, **dadurch gekennzeichnet, daß** das Makromolekül eine aktive Wasserstofffunktionalität von 17 bis 35 hat.

14. Dendritisches Makromolekül gemäß irgendeinem der Ansprüche 1 bis 6, **dadurch gekennzeichnet, daß** das Makromolekül eine aktive Wasserstofffunktionalität von 20 bis 30 hat.

15. Dendritisches Makromolekül gemäß Anspruch 1, **dadurch gekennzeichnet, daß** das Makromolekül in einem Verfahren erhältlich ist, welches die Schritte umfaßt:
i) Unterwerfen eines hydroxyfunktionalen dendritischen Polyethers gegenüber einer Alkolierung durch Mischen des Polyethers und eines Lösungsmittels und Zugeben, wenn eine klare Lösung erhalten ist, einer Base in einer stöchiometrischen Menge oder in einem leichten Überschuß;
ii) Unterwerfen des in Schritt (i) erhaltenen Alkolats gegenüber einer Nitrilierung durch Zugabe des Alkolats zu einer Acrylonitril-Unsättigung, wobei das Acrylonitril in einer stöchiometrischen Menge bezogen auf die Mole dieses Alkolats geladen ist, wobei das Alkolat in einen nitrilfunktionalen dendritischen Polyether umgewandelt wird; und
iii) Umwandeln dieses nitrilfunktionalen dendritischen Polyethers in einen aminfunktionalen dendritischen Polyether vom Polyethertyp durch:
a) Reduzieren des pHs der in Schritt (ii) erhaltenen Reaktionsmischung durch Zugabe von Protonen;
b) Durchleiten von H₂ durch das Reaktionsgemisch in Gegenwart eines reduzierenden Katalysators und anschließend Gewinnen des erhaltenen aminfunktionalen dendritischen Polyethers.

16. Dendritisches Makromolekül gemäß Anspruch 1, **dadurch gekennzeichnet, daß** dieses Makromolekül in einem Verfahren erhältlich ist, das die Schritte umfaßt:
i) Unterwerfen eines hydroxyfunktionalen dendritischen Polyesters gegenüber einer Acrylierung in einem Verhältnis von COOH:OH von 0,1:1 bis 1:1;
ii) Umsetzen des in Schritt (i) erhaltenen acrylierten Produkts mit mindestens einem primären aliphatischen, cycloaliphatischen oder aromatischen Amin, wobei das Amin in einer stöchiometrischen Menge oder in einem Überschuß zu diesem acrylierten Produkt gegeben wird, und die Reaktion bei Raumtemperatur oder einer erhöhten Temperatur durchgeführt wird, und anschließend das gewonnene aminfunktionale dendritische Polyester gewonnen wird.

17. Dendritisches Makromolekül gemäß Anspruch 16, **dadurch gekennzeichnet, daß** das primäre aliphatische, cycloaliphatische oder aromatische Amin Propylamin, Isopropylamin, Octylamin, Butylamin oder Benzylamin ist.

18. Dendritisches Makromolekül gemäß irgendeinem der Ansprüche 1 bis 17, **dadurch gekennzeichnet, daß** dieses Makromolekül eine inhärent verzweigte Struktur hat, die mindestens einen Esterrest, gegebenenfalls kombiniert mit mindestens einem Etherrest, umfaßt.

19. Dendritisches Makromolekül gemäß irgendeinem der Ansprüche 1 bis 17, **dadurch gekennzeichnet, daß** dieses Makromolekül eine inhärent verzweigte Struktur hat, die mindestens einen Etherrest, gegebenenfalls kombiniert mit mindestens einem Esterrest, umfaßt.

20. Dendritisches Makromolekül gemäß irgendeinem der Ansprüche 18 bis 19, **dadurch gekennzeichnet, daß** eine Vielzahl inhärent verzweigter Strukturen chemisch aneinander gebunden sind.

21. Dendritisches Makromolekül gemäß irgendeinem der Ansprüche 18 bis 20, **dadurch gekennzeichnet, daß** die inhärent verzweigte Struktur weiter mindestens einen monomeren oder polymeren Kettenstopperrest enthält, der chemisch daran gebunden ist.

22. Dendritisches Makromolekül gemäß irgendeinem der Ansprüche 18 bis 20, **dadurch gekennzeichnet, daß** die inhärent verzweigte Struktur weiter mindestens zwei verschiedene Kettenstopperreste enthält, die chemisch daran gebunden sind.

23. Dendritisches Makromolekül gemäß irgendeinem der Ansprüche 18 bis 22, **dadurch gekennzeichnet, daß** die inhärent verzweigte Struktur weiter mindestens einen monomeren oder polymeren Kettenabstandsverlängerer enthält, der chemisch daran gebunden ist.

24. Dendritisches Makromolekül gemäß irgendeinem der Ansprüche 18 bis 23, **dadurch gekennzeichnet, daß** das Makromolekül ferner einen monomeren oder polymeren Nukleus umfaßt, an den die inhärent verzweigte Struktur chemisch gebunden ist.

25. Zusammensetzung, **dadurch gekennzeichnet, daß** sie mindestens 15 Gew.% des dendritischen Makromoleküls gemäß irgendeinem der Ansprüche 1 bis 24 umfaßt und höchstens 85 Gew.% eines Polyetherpolyols mit einem Hydroxylwert von höchstens 40 mg KOH/g.

26. Zusammensetzung gemäß Anspruch 25, **dadurch gekennzeichnet, daß** das dendritische Makromolekül in einer Menge von 15 bis 75 Gew.% vorhanden ist.

27. Zusammensetzung gemäß Anspruch 25, **dadurch gekennzeichnet, daß** das dendritische Makromolekül in einer Menge von 30 bis 50 Gew.% vorhanden ist.

28. Zusammensetzung gemäß Anspruch 25, **dadurch gekennzeichnet, daß** das dendritische Makromolekül in einer Menge von 35 bis 45 Gew.% vorhanden ist.

## Revendications

1. Macromolécule dendritique **caractérisée en ce qu'**elle possède une structure ramifiée par nature constituée à partir d'un ou de plusieurs fragments choisis dans le groupe constitué par un fragment ester, un fragment éther et l'une quelconque de leurs combinaisons, une teneur en hydrogène actif d'au moins 3,8 mmoles/g et une fonctionnalité hydrogène actif d'au moins 16, **en ce que** ledit hydrogène actif est présent sous la forme d'un ou de plusieurs fragments mercapto et/ou amino facultativement en combinaison avec un ou plusieurs fragments hydroxyle et **en ce que** ladite macromolécule dendritique forme un liquide stable à 23 °C quand elle est mélangée à un rapport d'au moins 15 % en poids avec un polyéther polyol ayant un indice d'hydroxyle tout au plus de 40 mg de KOH/g.

2. Macromolécule dendritique selon la revendication 1, **caractérisée en ce que** ladite macromolécule forme un liquide stable à 23 °C quand elle est mélangée à un rapport de 15 % à 50 % en poids avec un polyéther polyol ayant un indice d'hydroxyle tout au plus de 40 mg de KOH/g.

3. Macromolécule dendritique selon la revendication 1, **caractérisée en ce que** ladite macromolécule forme un liquide stable à 23 °C quand elle est mélangée à un rapport de 15 % à 40 % en poids avec un polyéther polyol ayant un indice d'hydroxyle tout au plus de 40 mg de KOH/g.

4. Macromolécule dendritique selon la revendication 1, **caractérisée en ce que** ladite macromolécule est mélangeable à un rapport de 15 % à 30 % en poids avec un polyéther polyol ayant un indice d'hydroxyle tout au plus de 40 mg de KOH/g pour former un liquide stable à 23 °C.

5. Macromolécule dendritique selon la revendication 1, **caractérisée en ce que** ladite macromolécule forme un liquide stable à 23 °C quand elle est mélangée à un rapport d'au moins 15 % en poids avec un polyéther polyol ayant un indice d'hydroxyle tout au plus de 25 à 35 mg de KOH/g.

6. Macromolécule dendritique selon la revendication 1, **caractérisée en ce que** ladite macromolécule forme un liquide stable à 23 °C quand elle est mélangée à un rapport d'au moins 15 % en poids avec un polyéther polyol ayant un indice d'hydroxyle tout au plus de 28 à 32 mg de KOH/g.

7. Macromolécule dendritique selon l'une quelconque des revendications 1 à 6, **caractérisée en ce que** ladite macromolécule possède une teneur en hydrogène actif allant de 3,8 à 10 mmoles/g.

8. Macromolécule dendritique selon l'une quelconque des revendications 1 à 6, **caractérisée en ce que** ladite macromolécule possède une teneur en hydrogène actif allant de 3,8 à 7 mmoles/g.

9. Macromolécule dendritique selon l'une quelconque des revendications 1 à 6, **caractérisée en ce que** ladite macromolécule possède une teneur en hydrogène actif allant de 4 à 8 mmoles/g.

10. Macromolécule dendritique selon l'une quelconque des revendications 1 à 6, **caractérisée en ce que** ladite macromolécule possède une teneur en hydrogène actif allant de 4,4 à 5,7 mmoles/g.

11. Macromolécule dendritique selon l'une quelconque des revendications 1 à 6, **caractérisée en ce que** ladite macromolécule possède une fonctionnalité hydrogène actif allant de 16 à 70.

12. Macromolécule dendritique selon l'une quelconque des revendications 1 à 6, **caractérisée en ce que** ladite macromolécule possède une fonctionnalité hydrogène actif allant de 18 à 60.

13. Macromolécule dendritique selon l'une quelconque des revendications 1 à 6, **caractérisée en ce que** ladite macromolécule possède une fonctionnalité hydrogène actif allant de 17 à 35.

14. Macromolécule dendritique selon l'une quelconque des revendications 1 à 6, **caractérisée en ce que** ladite macromolécule possède une fonctionnalité hydrogène actif allant de 20 à 30.

15. Macromolécule dendritique selon la revendication 1, **caractérisée en ce que** ladite macromolécule peut être obtenue dans un procédé comprenant les étapes suivantes :
i) soumettre un polyéther dendritique hydroxyfonctionnel à une alcoolation en mélangeant ledit polyéther et un solvant et en ajoutant, quand une solution limpide est obtenue, une quantité stoechiométrique ou un léger excès de base ;
ii) soumettre l'alcoolate obtenu dans l'étape (i) à une nitrilation par l'ajout dudit alcoolate à une insaturation d'acrylonitrile, ledit acrylonitrile étant chargé en une quantité stoechiométrique par rapport aux moles dudit alcoolate, moyennement quoi ledit alcoolate est converti en polyéther dendritique à fonction nitrile ; et
iii) convertir ledit polyéther dendritique à fonction nitrile en polyéther dendritique à fonction amine de type polyéther en :
a) réduisant le pH du mélange réactionnel obtenu dans l'étape (ii) par l'ajout de protons ;
b) passant du H₂ à travers ledit mélange réactionnel en présence d'un catalyseur de réduction puis en récupérant le polyéther dendritique à fonction amine obtenu.

16. Macromolécule dendritique selon la revendication 1, **caractérisée en ce que** ladite macromolécule peut être obtenue dans un procédé comprenant les étapes suivantes :
i) soumettre un polyester dendritique hydroxyfonctionnel à une acrylation à un rapport COOH : OH allant de 0,1 : 1 à 1 : 1 ;
ii) faire réagir le produit acrylé obtenu dans l'étape (i) avec au moins une amine primaire aliphatique, cycloaliphatique ou aromatique, ladite amine étant chargée en quantité stoechiométrique ou en excès par rapport audit produit acrylé et ladite réaction étant réalisée à température ambiante ou à température élevée, puis récupérer le polyester dendritique à fonction amine obtenu.

17. Macromolécule dendritique selon la revendication 16, **caractérisée en ce que** ladite amine primaire aliphatique, cycloaliphatique ou aromatique est la propylamine, l'isopropylamine, l'octylamine, la butylamine ou la benzylamine.

18. Macromolécule dendritique selon l'une quelconque des revendications 1 à 17, **caractérisée en ce que** ladite macromolécule possède une structure ramifiée par nature comprenant au moins un fragment ester, facultativement combiné avec au moins un fragment éther.

19. Macromolécule dendritique selon l'une quelconque des revendications 1 à 17, **caractérisée en ce que** ladite macromolécule possède une structure ramifiée par nature comprenant au moins un fragment éther, facultativement combiné avec au moins un fragment ester.

20. Macromolécule dendritique selon l'une quelconque des revendications 18 et 19, **caractérisée en ce que** plusieurs structures ramifiées par nature sont chimiquement liées les unes aux autres.

21. Macromolécule dendritique selon l'une quelconque des revendications 18 à 20, **caractérisée en ce que** ladite structure ramifiée par nature comprend en outre au moins un fragment d'arrêt de chaîne monomère ou polymère chimiquement lié à celle-ci.

22. Macromolécule dendritique selon l'une quelconque des revendications 18 à 20, **caractérisée en ce que** ladite structure ramifiée par nature comprend en outre au moins deux fragments d'arrêt de chaîne différents chimiquement liés à celle-ci.

23. Macromolécule dendritique selon l'une quelconque des revendications 18 à 22, **caractérisée en ce que** ladite structure ramifiée par nature comprend en outre au moins un allongeur espaceur de chaîne monomère ou polymère chimiquement lié à celle-ci.

24. Macromolécule dendritique selon l'une quelconque des revendications 18 à 23, **caractérisée en ce que** ladite macromolécule comprend en outre un noyau monomère ou polymère auquel ladite structure ramifiée par nature est chimiquement liée.

25. Composition **caractérisée en ce qu'**elle comprend au moins 15 % en poids de la macromolécule dendritique selon l'une quelconque des revendications 1 à 24 et tout au plus de 85 % en poids d'un polyéther polyol possédant un indice d'hydroxyle tout au plus de 40 mg de KOH/g.

26. Composition selon la revendication 25, **caractérisée en ce que** ladite macromolécule dendritique est présente en une quantité allant de 1 5 à 75 % en poids.

27. Composition selon la revendication 25, **caractérisée en ce que** ladite macromolécule dendritique est présente en une quantité allant de 30 à 50 % en poids.

28. Composition selon la revendication 25, **caractérisée en ce que** ladite macromolécule dendritique est présente en une quantité allant de 35 à 45 % en poids.
